# EUROPEAN PATENT APPLICATION

(11) **EP 4 721 971 A1**
(43) Date of publication of application: **08.04.2026**
(21) Application number: 24204977.3
(22) Date of filing: 07.10.2024
(51) Int. Cl.: B32B 7/12, C08G 59/50, C08G 59/56, C09J 163/00

(54) **METHOD OF SEPARATING BONDED ARTICLES**

(71) Applicant: Henkel AG & Co. KGaA, 40589 Düsseldorf (DE)
(72) Inventor: Franken, Uwe, 41542 Dormagen (DE); Schriefers, Mathias, 41199 Mönchengladbach (DE); Friedrich, Norman, 40225 Duesseldorf (DE)

(57) **Abstract**

A two component (2K) composition comprising:
a first component comprising:
a) at least one epoxide compound; and,

a second component comprising:
b) at least one compound which provides at least one epoxide-reactive group;
c) at least one accelerator,

wherein the composition further comprises:
d) at least one particulate liquid-absorbent polymer,
and wherein the composition is characterized by a molar ratio of epoxide groups to epoxide-reactive groups (E^{R}) of from 0.6:1 to 1.2:1, for example from 0.9:1 to 1.1:1.

## Description

### FIELD OF THE INVENTION

The present disclosure is directed to the debonding of adhesively bonded articles. More particularly, the present disclosure is directed to the debonding of adhesively bonded articles of which a constituent adhesive comprises a particulate liquid-absorbent polymer.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of aggressive chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications. This can be particularly detrimental where the substrates themselves are of high economic value, as may be the case with bonded electrical components and metallic materials.

WO 01/30932 A2 (Henkel KGaA) describes the reversible separation of adhesively bonded composites by applying electromagnetic alternating fields. The adhesively bonded composite comprises at least one primer coating which contains nanoscale sized particles having ferromagnetic, ferrimagnetic, superparamagnetic or piezoelectric characteristics. Large amounts of heat are generated locally in the primer coat pertaining to the adhesive bonded composites by applying electromagnetic alternating fields. Where the primer layer is interposed between the substrate and a thermoplastic adhesive layer, the local heat generation causes a softening of the thermoplastic resin. Conversely, where the primer layer is interposed between the substrate and a thermosetting adhesive layer, the local heat generation can split the cross-linked structure of the binding agent matrix. In both cases, strong local heating of the boundary layer enables quasi-adhesive substrate separation at low force inputs.

EP 4 011 996 A1 (Henkel AG & Co. KGaA) is directed to a method for detaching two substrates bonded by an adhesive. The method comprises the steps of: i) treating two substrates bonded by an adhesive with a debonding agent comprising acetone and/or oleic acid at a temperature from 20°C to 90°C; and, ii) removing the substrates from the adhesive.

WO2021/249749 A1 (BASF SE) discloses a method for debonding a bonded article, which article comprises at least two components which are bonded to one another by means of a polyurethane adhesive selected from aqueous polyurethane dispersion adhesives and polyurethane hotmelt adhesives. At least one of the components is a thermoplastic polyurethane. The components are debonded by treatment with an aqueous surfactant composition at elevated temperatures.

There is considered to remain a need in the art to provide an efficacious method of debonding a bonded article which can be performed in a simple and efficient manner, without requiring harsh chemicals, elevated temperatures, mechanical abrasion or the concomitant application of significant force. Moreover, a method in which the separated substrates can retain their utility and be re-used or recycled would be advantageous.

### STATEMENT OF THE INVENTION

In accordance with a first aspect of the present disclosure, there is provided a two component (2K) composition comprising:
a first component comprising:
   a) at least one epoxide compound; and,
a second component comprising:
   b) at least one compound which provides at least one epoxide-reactive group;
   c) at least one accelerator,

   wherein the composition further comprises:
      d) at least one particulate liquid-absorbent polymer,
   and wherein the composition is characterized by a molar ratio of epoxide groups to epoxide-reactive groups (E^{R}) of from 0.6:1 to 1.2:1. For surety, constituent d) may be present in the first component, the second component or both of said first and second component.

Preferably the two component (2K) composition comprises, based on the weight of the composition:
from 30 to 70 wt.%, for example from 40 to 70 wt.% or from 50 to 70 wt.% of a) said at least one epoxide compound;
from 0.01 to 25 wt.%, for example from 0.1 to 15 wt.% or from 0.1 to 5 wt.% of b) said at least one compound which provides at least one epoxide-reactive group;
from 0.01 to 5 wt.%, for example from 0.01 to 2 wt.% or from 0.01 to 1 wt.% of c) said at least one accelerator; and,
from 1 to 50 wt.%, for example from 1 to 25 wt.% or from 5 to 25 wt.% of d) said at least one particulate liquid-absorbent polymer,
wherein the composition is characterized by a molar ratio of epoxide groups to epoxide-reactive groups (E^{R}) of from 0.6:1 to 1.2:1, preferably from 0.9:1 to 1.1:1.

It is preferred that constituent a) comprises at least polyepoxide compound having an epoxide equivalent weight of from 100 to 700 g/eq. Independently of, or additional to this statement of preference, it is desired that constituent b) comprises at least one polyamine having at least two amine hydrogens reactive toward epoxide groups.

In certain embodiments, the or each particulate liquid-absorbent polymer of constituent d) is characterized by a mean volume particle size (Dv50) of from 0.1 to 1000 µm, preferably from 0.1 to 500 µm, more preferably from 0.1 to 250 µm, as determined by dynamic light scattering based on polymer particles of which the moisture content is less than 5 wt.%. Independently of, or additional to this statement of desired particle size, it is preferred that the or each particulate liquid-absorbent polymer is characterized by: a shear modulus of less than or equal to 1000 Pascals, as determined at room temperature in accordance with ASTM E143-20 *Standard Test Method for Shear Modulus at Room Temperature;* and / or, a centrifuge retention capacity of at least 5 g/g, for example from 5 to 50 g/g, as determined at room temperature according to EDANA WSP 241.2. using an aqueous solution containing 0.9 wt.% NaCl.

In accordance with a second aspect of the present disclosure, there is provided a bonded article comprising at least one layer of a first adhesive interposed between two substrate surfaces, said bonded article being further provided with at least one layer of a second adhesive which is interposed between said two substrate surfaces, wherein: the or each first adhesive layer has a dry film thickness of from 10 to 500 µm, preferably from 30 to 300 µm; and, said first adhesive is obtained by curing a two component (2K) composition as defined herein above and in the appended claims.

In important embodiments, the bonded article comprises: a first substrate having an inner surface; and, a second substrate having an inner surface, wherein said layers of the first and second adhesive are interposed between the inner surfaces of the first and second substrates. Preferably at least one of said first and second substrates of the bonded article is metallic. It is also preferred that at least one layer of said first adhesive directly contacts the surface of a substrate.

The polymers of constituent d) of the two component (2K) composition should absorb liquids, for instance aqueous liquids such as the debonding solution described herein below. The particles therefore provide for the ingress of liquids into the matrix obtained upon curing of the two component (2K) composition. The particulates swell upon absorption of liquids and thereby create stresses within the layer or layers of first adhesive of the bonded article.

In accordance with a further aspect of the present disclosure, there is provided a method for debonding a bonded article as defined herein above and in the appended claims, said method comprising the steps of:
i) providing said bonded article;
ii) treating said bonded article at a temperature of from 20 to 90°C with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 4 to 14; and,
iii) separating said at least one layer of first adhesive from its interposition between said two substrate surfaces.

It is preferred that said treatment step ii) comprises at least partially immersing the bonded article in said debonding solution. Independently of, or additional to this statement of preference, it is preferred that said treatment step ii) is characterized by a contact time of from 0.1 to 24 hours, preferably from 0.5 to 20 hours.

Where the aspects of the disclosure are described herein as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms *"comprising", "comprises"* and *"comprised* of" as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified. For completeness, the term *"comprising"* encompasses *"consisting of'.*

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"inner", "outer", "top", "back", "above", "below", "left", "right"* and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the material or may be present in the material in an amount up to x wt.%.

The molecular weights referred to in this specification can be measured with gel permeation chromatography (GPC) using polystyrene calibration standards, such as is done according to ASTM 3536.

The term *"acid value"* references a determination of the mass (mg) of potassium hydroxide (KOH) which is necessary to neutralize 1g of a compound. The acid value can be determined by potentiometric analysis in accordance DIN EN ISO 2114.

The term *"hydroxyl value"* as used herein is defined as the mass (mg) of potassium hydroxide required to neutralize the acetic acid taken up on acetylation of one gram of a chemical substance that contains free hydroxyl groups. The hydroxyl value may be determined in accordance with DIN 53240.

The term *"flash point"* as used herein refers to the minimum temperature at which a liquid gives off vapor within a test vessel in sufficient concentration to form an ignitable mixture with air near the surface of the liquid. It may be determined using the appropriate active standard test methods, of which mention may be made of: ASTM D-56 *Standard Method of Test for Flashpoint by Tag Closed Tester;* and, ASTM *D93 Standard Method of Test for Flashpoint by Pensky-Martens Closed Tester.*

Viscosities of the compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

As used herein, room temperature is 23°C plus or minus 2°C.

As used herein, *"ambient conditions"* means the temperature and pressure of the surroundings in which either the adhesive composition, the debonding solution or the bonded article are located.

Unless otherwise stated, the term *"particle size"* refers to the largest axis of the particle. In the case of a generally spherical particle, the largest axis is the diameter.

As used herein, by *"Dv50 particle size"* is meant that the particle size distribution is such that at least 50% of the particles by volume have a particle size diameter of less than the specified value. Unless otherwise stated, that particle size is determined by dynamic light scattering (DLS).

As used herein, the term *"solids content"* refers to the percent by weight of non-volatile components in a composition. The solids content may be determined as the inverse value of the volatile content obtained in accordance with ASTM D2369 Standard Test Method for Volatile Content of Coatings.

*"Two-component (2K) compositions"* in the context of the present disclosure are understood to be compositions in which a first part (A) and a second part (B) must be stored in separate vessels because of their (high) reactivity. The two parts are mixed only shortly before application and then react, typically without additional activation, with bond formation and thereby formation of a polymeric network. Herein higher temperatures may be applied in order to accelerate the cross-linking reaction.

As used herein, *"curing"* of the two-component (2K) composition refers to the formation of a matrix, where applicable on a substrate surface: whilst the curing will include cross-linking reaction(s), it can further encompasses: evaporation of any solvents present in the composition *(drying);* and, coalescence of the particulate or dispersed phase of the composition. Such curing may be performed under ambient conditions or by deliberate exposure to heat and / or irradiation. The degree of cure may be partial or complete: the degree (%) of cross-linking can, in particular, be determined by dynamic mechanical thermal analysis (DMTA) using a Polymer Laboratories MK III DMTA Analyzer under an inert gas atmosphere.

As used herein, *"metallic"* means any type of metal, metal alloy, or mixture thereof. As used herein, the term *"alloy"* refers to a substance composed of two or more metals or of a metal and a non-metal which have been intimately united, usually by being fused together and dissolved in each other when molten.

As used herein, an *"active hydrogen compound"* is a compound that includes at least one hydrogen atom that may be readily dissociated in an aqueous environment. Preferably, the hydrogen atom is attached to a nitrogen atom, an oxygen atom, a phosphorous atom, or a sulfur atom.

A *"ionic polyurethane"* as used herein is one that contains a hydrophilic ionizable group.

The term *"blocked'* as used herein refers to a compound that has been reacted with a second compound - possessing a *"blocking group"* - such that its reactive functionality is not available until such time as the blocking group is removed. The blocking group can be selectively removed at an appropriate point in the synthetic sequence: the triggering event may be *inter alia* moisture, heat or irradiation. Examples of blocked isocyanates include those that have been co-reacted with phenol, methyl ethyl ketoxime or ε-caprolactam.

The term *"debonding composition"* as used herein refers to that composition which actually contacts the bonded articles. Such contacting may occur in a so-called *"bath"* which is shaped, sized and disposed to enable at least part of the substrate to be immersed therein. The bath should moreover be sized to allow for movement of the composition around and throughout the loaded substrate, which movement can be further enhanced with recirculation and / or ultrasonics. The pH of the composition within the bath, the temperature of the bath, and contact time of the substrate are result effective variables which should be monitored either manually or automatically, whenever possible.

As used herein, *"mineral acid"* refers to an acid derived from one or more inorganic compounds. A mineral acid is not organic and all mineral acids release hydrogen ions when dissolved in water.

As used herein, *"phosphoric acid'* refers to ortho-phosphoric acid having the formula H₃PO₄, which acid is typically available as an aqueous solution having a concentration up to 75 wt.% H₃PO₄. As used herein *"phosphonic acid"* refers to the phosphorus oxoacid having the formula H₃PO₃ that consists of a single pentavalent phosphorus covalently bound via single bonds to a single hydrogen and two hydroxy groups and via a double bond to an oxygen.

As used herein, the term *"a-hydroxycarboxylic acid"* means a carboxylic acid having at least one hydroxyl functional group occupying an α-position on said acid (carbon adjacent to a carboxylic acid functional group). The presence of hydroxyl groups occupying positions in the molecule other than the α-position on said acid is not precluded. When present, α-hydroxycarboxylic acid is included in the present composition in the form of the free acid.

As used herein *"basicity"* means the quality of being a base, not an acid. More particularly, in accordance with the Lewis theory of acids and bases, a base is an electron-pair donor. This definition encompasses but is not limited to Brønsted-Lowry bases, which compounds act as proton acceptors.

Water, for use as a (co-)solvent or diluent herein, is intended to mean water of low solids content as would be understood by a person of ordinary skill in the art. The water may, for instance, be distilled water, demineralized water, deionized water, reverse osmosis water, boiler condensate water, or ultra-filtration water. Tap water may be tolerated in certain circumstances.

As used herein *"solvents"* are substances capable of dissolving another substance to form a uniform solution; during dissolution neither the solvent nor the dissolved substance undergoes a chemical change. Solvents may either be polar or non-polar. The term *"alcoholic solvent'* encompasses such solvents which are any water-soluble mono-alcohols, diols or polyols that are liquids at 25°C at atmospheric pressure.

The term *"aprotic solvents"* as used herein refers to solvents that do not yield or accept a proton. Conversely *"protic solvents"* are those solvents capable of yielding or accepting a proton. The *"polar solvent"* as used herein refers to a solvent having a dielectric constant (ε) of more than 5 as measured at 25°C: the term encompasses both aprotic and protic solvents. The determination of dielectric constant (ε) is well known in the art and is within the knowledge of the skilled person: the use of measured voltages across parallel plate capacitors in such determinations may be mentioned.

The term *"water-immiscible liquid",* as used herein refers to a liquid that forms a two-phase system with water. In this regard, a particular preference may be noted for liquids which are slightly soluble, very slightly soluble or practically insoluble in water and are thereby characterized by requiring ≥ 100 ml of water to dissolve 1 g of the named compound at room temperature.

As used herein, *"polyol"* refers to any compound comprising two or more hydroxyl groups: the term is thus intended to encompass diols, triols and compounds containing four or more -OH groups.

As used herein, "*C₁-Cₙ alkyl"* group refers to a monovalent group that contains 1 to n carbons atoms, that is a radical of an alkane and includes straight-chain and branched organic groups. As such, a *"C₁-C₄ alkyl"* group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present disclosure, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a group that are radicals of a linear, branched or cyclic alkane, which group may be substituted or unsubstituted and may optionally be interrupted by at least one heteroatom.

The term *"C₁-Cₙhydroxyalkyf'* as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: non-limiting examples thereof are a methoxy group, an ethoxy group and an iso-propyloxy group. The term *"alkoxylated"* as used herein means comprising at least one alkoxy group.

As used herein, *"C₂-C₆ alkenyl"* group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methylethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term *"C₃-C₆ cycloalkyl"* as used herein means an optionally substituted, saturated cyclic hydrocarbon having 3-6 carbon atoms. In the present disclosure, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, *"C₃-C₆ cycloalkylene"* means a divalent radical formed by the removal of two hydrogen atoms from one or more rings of a cycloalkyl group having from 3 to 6 carbon atoms.

As used herein, *"C₂-C₁₈ alkenyl"* refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "Z" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH_{3;} -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH_{;} - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an *"C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

As used herein, *"alkylaryl"* refers to alkyl-substituted aryl groups and *"substituted alkylaryl"* refers to alkylaryl groups further bearing one or more substituents as set forth above. Further, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl"* and *"heteroaryl"* moieties are alkyl, cycloalkyl and aryl groups as defined hereinabove, respectively, containing N, O, Si or S as part of their structure.

The term *"heterocyclyl'* refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### BRIEF DESCRIPTION OF THE DRAWINGS

The present disclosure will hereinafter be described in conjunction with the following drawings, wherein like numerals denote like elements, and wherein:
Figure 1 illustrates a bonded article in accordance with a first embodiment of the present disclosure;
Figure 2 illustrates a bonded article in accordance with a second embodiment of the present disclosure; and,
Figure 3 illustrates a bonded article in accordance with a third embodiments of the present disclosure.

### DETAILED DESCRIPTION OF THE INVENTION

### A) BONDED STRUCTURE

The articles to be treated with the above-described debonding solution include at least one constituent substrate bonded with first and second adhesives. This therefore encompasses articles which comprise a singular substrate which is folded upon itself such that one part of the substrate may be adhered to another part thereof. More typically however, the bonded article will comprise at least two substrates which are bonded together by means of said first and second adhesives.

The constituent substrate(s) may be selected from the group consisting of: metallic materials; semiconductor materials; polymers, including polyesters, polyamides and rubbers; glass; ceramics; lignocellulosic materials, including cotton, rayon (*viscose*) and cellophane; cellulose esters; and, mixtures or composites thereof. Where the bonded article comprises at least two substrates, said substrates may be the same or may be different from one another. And, as noted above, the present disclosure has particular applicability to the debonding of articles which comprise a metallic material as at least one constituent substrate.

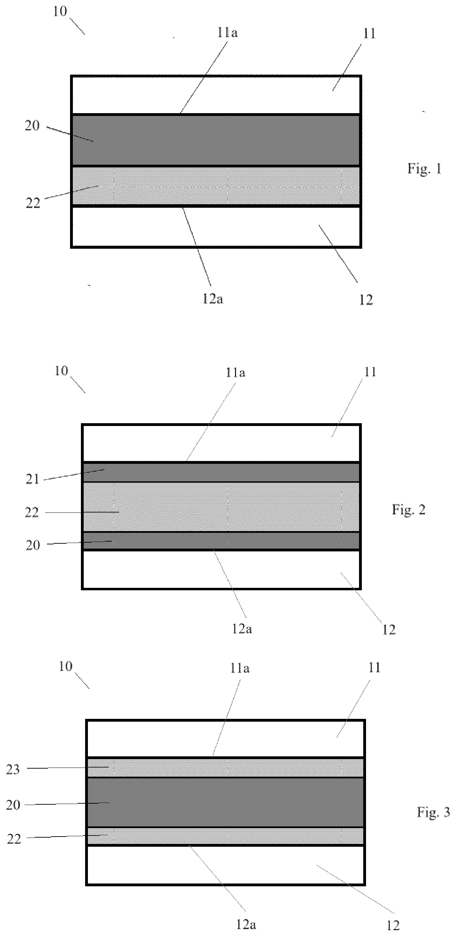

Figure 1 depicts a bonded article (10) in accordance with a first embodiment of the present disclosure. The bonded article (10) includes a first substrate (11) and a second substrate (12) which respectively possess inner surfaces (11a, 12a). A first adhesive layer (20) is provided directly upon the inner surface (11a) of the first substrate (11) and has a dried film thickness (d₂₀) of from 30 to 500µm. That first adhesive layer (20), which incorporates liquid-absorbent polymeric particulates (*not shown*) is, in important embodiments, obtained by the curing - in the presence of said liquid-absorbent polymeric particulates - of a two-component (2K) composition based on epoxide compounds.

Interposed between that first adhesive layer (20) and the inner surface (12a) of the second substrate (12) is a second adhesive layer (22), which layer should typically possess a dried film thickness (d₂₂) of from 30 to 1000 µm, for example from 30 to 500µm.

There is no particular intention to limit the constituent adhesive of the second adhesive layer (22) but it should be compatible with the first adhesive layer (20). However, in some embodiments, the second adhesive may be distinct from the first adhesive and possess a higher intra-layer cohesive strength than the first adhesive, as determined by comparative testing of the adhesives under tensile stress applied to layers thereof. The cohesive strength is closely correlated to the bulk physical properties of the adhesive: in the present disclosure the elevated intra-layer cohesive strength of the second adhesive may be consequential to an increased crosslinking density of the second adhesive relative to the first adhesive. Alternatively or additionally, the second adhesive may, as compared to the first adhesive, possess a higher loading of particulate fillers which contribute to the cohesive bond strength.

The second adhesive may possess, in important embodiments, an intra-layer cohesive strength which is at least 10% greater than the intra-layer cohesive strength of the first adhesive. Preferably, the second adhesive may have an intra-layer cohesive strength which is at least 15% or at least 20% greater than the intra-layer cohesive strength of the first adhesive.

In an alternative expression, which is not intended to be mutually exclusive of that given immediately above, the intra-layer cohesive strength of the first adhesive may be from 2 to 8 MPa and the intra-layer cohesive strength of the second adhesive may be at least 10 MPa, for instance from 10 to 100 MPa.

Exemplary adhesives of which the second adhesive layer (22) may be composed include but are not limited to: epoxide adhesives; acrylate adhesives, which may be water-borne or solvent-borne; and, polyurethane adhesives which may be selected from water-borne polyurethane adhesives, solvent-borne polyurethane adhesives and polyurethane hotmelt adhesives. A preference may be noted, however, for the bonded articles (10) comprising - as said second adhesive - epoxide adhesives.

In the alternative embodiment illustrated in Figure 2, the bonded article (10) is provided with two layers (20, 21) of the first adhesive which each incorporate liquid-absorbent polymeric particulates (*not shown*) and which each respectively directly contact the inner surfaces (11a, 12a) of the first (11) and second (12) substrates. The specific constitution of the two layers (20, 21) may be the same of different but both adhesives are, in important embodiments, obtained by the curing of a two-part (2K) composition as defined herein in the presence of said liquid-absorbent polymeric particulates. Moreover, the dry film thickness (d₂₀, d₂₁) of the two layers may be the same or different but should each be in the range from 30 to 500 µm. These adhesive layers (20, 21) may be considered as debondable primer layers of the substrates (11, 12). A second adhesive layer (22), typically having a dried film thickness (d₂₂) of from 30 to 1000µm, is interposed between the layers (20, 21) of the first adhesive.

In the further embodiment illustrated in Figure 3, the bonded article (10) is provided with two layers (22, 23) of the second adhesive which respectively directly contact the inners surfaces (11a, 12a) of the first (11) and second (12) substrates. The specific constitution of the two layers (22, 23) may be the same or different. Moreover, the dry film of thickness (d₂₂, d₂₃) of the two layers may be the same or different but should each be in the range from 30 to 1000 µm. A layer (20) of a first adhesive, having a dried film thickness (d₂₂) of from 30 to 500µm, is interposed between the layers (22, 23) of the second adhesive: that layer (20) incorporates the liquid-absorbent polymeric particulates *(not shown).*

In each of these embodiments, the layers (20, 21) of the first adhesive are intended to provide a locus at which the debonding of the article (10) may occur upon treatment of that article with the debonding solution described herein. Whilst the configuration of the bonded article (10) in Figure 3 is operable, debonding of the article may still result in significant residual second adhesive on the substrates (10, 11) after the debonding operation, which residues may need to be removed to enable the re-use or recycling of the substates. For this reason, the provision of the layers (20, 21) of the first adhesive in direct contact with one or more of the substrates (11, 12) is considered desirable.

The provision of two substrates (11, 12) has been illustrated in the figures for ease of description. It will be recognized that the configuration depicted in Figures 1 to 3 could actually be attained using a singular substrate: a single substrate may, for instance, be subjected to bending, incurvating, folding, pleating, twisting or other means of contortion in order to dispose opposite to one another the inner surfaces of distinct parts of that substrate.

Further, the articles (10) of Figure 1 to 3 are simplifications. The bonded article (10) to be treated may be provided in various forms, including bonded films, sheets, plates, fibrous non-woven sheets, fibrous woven sheets, cuboids, spheres, annuli, solid cylinders, tubes and wires: the provision of bonded articles in more complex, shaped forms - obtained by conventional techniques such as bending, blanking, casting, forging, rolling, welding and weaving - is of course not precluded.

As described above, the bonded article of the present disclosure comprises at least one layer (20, 21) of a first adhesive which incorporates liquid-absorbent polymeric particulates. The or each layer (20, 21) of first adhesive is obtained by the curing of a two component (2K) composition based on epoxide compounds.

### Two component (2K) Epoxy Composition

As described above, the two component (2K) composition comprises:
a first component comprising:
   a) at least one epoxide compound; and,
a second component comprising:
   b) at least one compound which provides at least one epoxide-reactive group;
   c) at least one accelerator,

   wherein the composition further comprises:
      d) at least one particulate liquid absorbent polymer,
   and wherein the composition is characterized by a molar ratio of epoxide groups to epoxide-reactive groups (E^{R}) of from 0.6:1 to 1.2:1, for example from 0.9:1 to 1.1:1. For completeness, constituent d) may be disposed in the first component, the second component or partially disposed in each of the first and second components.

### a) Epoxide Compound

The two component (2K) composition of the present disclosure comprises, in the first component thereof, a) at least one epoxide compound. The composition may typically comprise from 30 to 70 wt.%, for example from 40 to 70 wt.% or from 50 to 70 wt.% of a) said at least one epoxide compound, based on the weight of said composition.

Epoxide compounds as used herein for constituent a) may include mono-functional epoxide compounds, multi- or poly-functional epoxide compounds, and combinations thereof. The epoxy resins may be pure compounds but equally may be mixtures epoxide functional compounds, including mixtures of compounds having different numbers of epoxide groups per molecule. An epoxide compound resin may be saturated or unsaturated, aliphatic, cycloaliphatic, aromatic or heterocyclic and may be substituted. Further, the epoxide compound may also be monomeric or polymeric.

Without intention to limit the present disclosure, illustrative monoepoxide compounds include: alkylene oxides; epoxy-substituted cycloaliphatic hydrocarbons, such as cyclohexene oxide, vinylcyclohexene monoxide, (+)-cis-limonene oxide, (+)-cis,trans-limonene oxide, (-)-cis,trans-limonene oxide, cyclooctene oxide, cyclododecene oxide and α-pinene oxide; epoxy-substituted aromatic hydrocarbons; monoepoxy substituted alkyl ethers of monohydric alcohols or phenols, such as the glycidyl ethers of aliphatic, cycloaliphatic and aromatic alcohols; monoepoxy-substituted alkyl esters of monocarboxylic acids, such as glycidyl esters of aliphatic, cycloaliphatic and aromatic monocarboxylic acids; monoepoxy-substituted alkyl esters of polycarboxylic acids wherein the other carboxy group(s) are esterified with alkanols; alkyl and alkenyl esters of epoxy-substituted monocarboxylic acids; epoxyalkyl ethers of polyhydric alcohols wherein the other OH group(s) are esterified or etherified with carboxylic acids or alcohols; and, monoesters of polyhydric alcohols and epoxy monocarboxylic acids, wherein the other OH group(s) are esterified or etherified with carboxylic acids or alcohols.

By way of example, the following glycidyl ethers might be mentioned as being particularly suitable monoepoxide compounds for use herein: methyl glycidyl ether; ethyl glycidyl ether; propyl glycidyl ether; butyl glycidyl ether; pentyl glycidyl ether; hexyl glycidyl ether; cyclohexyl glycidyl ether; octyl glycidyl ether; 2-ethylhexyl glycidyl ether; allyl glycidyl ether; benzyl glycidyl ether; phenyl glycidyl ether; 4-tert-butylphenyl glycidyl ether; 1-naphthyl glycidyl ether; 2-naphthyl glycidyl ether; 2-chlorophenyl glycidyl ether; 4-chlorophenyl glycidyl ether; 4-bromophenyl glycidyl ether; 2,4,6-trichlorophenyl glycidyl ether; 2,4,6-tribromophenyl glycidyl ether; pentafluorophenyl glycidyl ether; o-cresyl glycidyl ether; m-cresyl glycidyl ether; and, p-cresyl glycidyl ether.

In an embodiment, the monoepoxide compound conforms to Formula (EI) herein below: 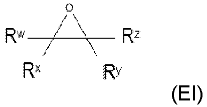 wherein: R^{w}, R^{x}, R^{y} and R^{z} may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R^{y} and R^{z} is not hydrogen.

It is preferred that R^{w}, R^{x} and R^{y} are hydrogen and R^{z} is either a phenyl group or a C₁-C₈ alkyl group and, more preferably, a C₁-C₄ alkyl group.

Having regard to this embodiment, exemplary monoepoxides include: ethylene oxide; 1,2-propylene oxide (*propylene oxide*); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide; and, styrene oxide.

In the present disclosure, reference is also made to using at least one monoepoxide compound selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and, cyclododecene oxide.

Again, without intention to limit the present disclosure, suitable polyepoxide compounds may be liquid, solid or in solution in solvent. Further, such polyepoxide compounds should have an epoxide equivalent weight of from 100 to 700 g/eq, for example from 120 to 320 g/eq. And generally, diepoxide compounds having epoxide equivalent weights of less than 500 g/eq. or even less than 400 g/eq. are preferred: this is predominantly from a costs standpoint, as in their production, lower molecular weight epoxy resins require more limited processing in purification.

As examples of types or groups of polyepoxide compounds which may be polymerized in present invention, mention may be made of: glycidyl ethers of polyhydric alcohols and polyhydric phenols; glycidyl esters of polycarboxylic acids; and, epoxidized polyethylenically unsaturated hydrocarbons.

Suitable diglycidyl ether compounds may be aromatic, aliphatic or cycloaliphatic in nature and, as such, can be derivable from dihydric phenols and dihydric alcohols. And useful classes of such diglycidyl ethers are: diglycidyl ethers of aliphatic and cycloaliphatic diols, such as 1,2-ethanediol, 1,4-butanediol, 1,6-hexanediol, 1,8-octanediol, 1,12-dodecanediol, cyclopentane diol and cyclohexane diol; bisphenol A based diglycidylethers; bisphenol F diglycidyl ethers; diglycidyl o-phthalate, diglycidyl isophthalate and diglycidyl terephthalate; polyalkyleneglycol based diglycidyl ethers, in particular polypropyleneglycol diglycidyl ethers; and, polycarbonatediol based glycidyl ethers. Other suitable diepoxides which might also be mentioned include: diepoxides of double unsaturated fatty acid C₁-C₁₈ alkyl esters; butadiene diepoxide; polybutadiene diglycidyl ether; vinylcyclohexene diepoxide; and, limonene diepoxide.

Further illustrative polyepoxide compounds include but are not limited to: glycerol polyglycidyl ether; trimethylolpropane polyglycidyl ether; pentaerythritol polyglycidyl ether; diglycerol polyglycidyl ether; polyglycerol polyglycidyl ether; and, sorbitol polyglycidyl ether.

And examples of highly preferred polyepoxide compounds include: bisphenol-A epoxy resins, such as DER^{™} 331, DER^{™} 330, DER^{™} 337 and DER^{™} 383; bisphenol-F epoxy resins, such as DER^{™} 354; bisphenol-A/F epoxy resin blends, such as DER^{™} 353; aliphatic glycidyl ethers, such as DER^{™} 736; polypropylene glycol diglycidyl ethers, such as DER^{™} 732; solid bisphenol-A epoxy resins, such as DER^{™} 661 and DER^{™} 664 UE; solutions of bisphenol-A solid epoxy resins, such as DER^{™} 671-X75; epoxy novolac resins, such as DEN^{™} 438; brominated epoxy resins such as DER^{™} 542; castor oil triglycidyl ether, such as ERISYS^{™} GE-35H; polyglycerol-3-polyglycidyl ether, such as ERISYS^{™} GE-38; and, sorbitol glycidyl ether, such as ERISYS^{™} GE-60.

Independently of or additional to any embodiments mentioned above, constituent a) of the composition can, in certain embodiments, comprise epoxide-functional alkoxy silanes having the formula (ES):

E-(CH₂)ₙ-Si(R^{s})ₘ(OR^{t})₃₋ₘ (ES)

wherein:
E is 2,3-epoxypropoxy, epoxycyclohexyl or epoxycyclopentyl;
n is from 1-10;
m is 0, 1 or 2;
each R^{s} is independently C₁-C₃ alkyl; and,
each R^{t} is independently C₁-C₃ alkyl.

In preferred compounds of Formula (ES): E is 2,3-epoxypropoxy; n is from 1 to 8; m is 0 or 1; R^{s}, when present, is methyl or ethyl; and, each R^{t} is independently methyl or ethyl.

Exemplary silanes, which may be used alone or in combination, include but are not limited to: 2-(3,4-epoxycyclohexyl)ethyltrimethoxysilane; 3-glycidoxypropyl methyldimethoxysilane; γ-glycidoxy propyl trimethoxy silane; γ-glycidoxy ethyl trimethoxy silane; γ-glycidoxymethyl trimethoxy silane; γ-glycidoxy methyl triethoxy silane; 3-glycidoxypropyl methyldiethoxysilane; γ-glycidoxy ethyl triethoxy silane; γ-glycidoxy propyl triethoxy silane; and, 8-glycidooxyoctyl trimethoxysilane. The use of γ-glycidoxy propyl trimethoxy silane may be mentioned in particular.

When present, the epoxide functional alkoxysilanes should constitute less than 20 wt.%, preferably less than 15 wt.% or less than 10 wt.%, based on the total weight of epoxide functional compounds in the composition.

The present disclosure also does not preclude the first component of the curable, two-component (2K) composition from further comprising one or more cyclic monomers selected from the group consisting of: oxetanes; cyclic carbonates; cyclic anhydrides; and, lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and, EP-A-0 119 840. However, such cyclic co-monomers should constitute less than 20 wt.%, preferably less than 10 wt.% or less than 5 wt.%, based on the total weight of epoxide functional compounds in the composition.

### b) Curative for the Epoxide Compound

The curing agent for the epoxide compounds, disposed in the second component of the composition, comprises or consists of b) at least one compound which provides at least one epoxide-reactive group. Each curative compound may either possess at least one epoxide-reactive group or, in the case of latent curative compounds, possess a functional group which yields an epoxide-reactive group upon exposure to a triggering condition, such as heat or irradiation. Constituent b) may, in certain circumstances, be constituted by a combination of reactive and latent curatives.

The above aside, constituent b) should be present in the composition in an amount which is sufficient to effect the complete cure of the epoxide compound(s). When formulating two-component (2K) composition, the composition is desirably characterized by a molar ratio of epoxide groups to epoxide-reactive groups (E^{R}) of from 0.6:1 to 1.2:1, for example from 0.9:1 to 1.1:1. The term epoxide-reactive groups includes latent reactive groups.

In an alternative expression, which is not intended to be mutually exclusive of that given above, it is preferred that the two component (2K) composition comprises, based on the weight of the composition, from 0.01 to 25 wt.% of b) said at least one compound which provides at least one epoxide-reactive group. Preferably said composition comprises from 0.1 to 15 wt.%, for example from 0.1 to 5 wt.% of b) said at least one compound which provides at least one epoxide-reactive group.

Reactive curing agents may, in particular, include one or more of: i) at least one polyamine having at least two amine hydrogens reactive toward epoxide groups; ii) at least one mercapto compound having at least two mercapto groups reactive toward epoxide groups; and, iii) at least one Mannich base.

The at least one polyamine having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination, include but are not limited to the following:
i) Aliphatic, cycloaliphatic or arylaliphatic primary diamines of which the following examples may be mentioned: 2,2-dimethyl-1,3-propanediamine; 1,3-pentanediamine (DAMP); 1,5-pentanediamine; 1,5-diamino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediamine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 1,2-, 1,3- and 1,4-diaminocyclohexane; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane (isophorone diamine, IPDA); 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.0^{2,6}]-decane (TCD-diamine); 1,4-diamino-2,2,6-trimethylcyclohexane (TMCDA); 1,8-menthanediamine; 3,9-bis(3-aminopropyl)-2,4,8,10-tetraoxaspiro[5.5]undecane; and, 1,3-bis(aminomethyl)benzene (MXDA).
ii) Tertiary amine group-containing polyamines with two or three primary aliphatic amine groups of which the following specific examples may be mentioned: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)cyclohexylamine; N,N-bis(3-aminopropyl)-2-ethyl-hexylamine; tris(2-aminoethyl)amine; tris(2-aminopropyl)amine; tris(3-aminopropyl)amine; and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel).
iii) Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; cycloaliphatic ether group-containing diamines obtained from the propoxylation and subsequent amination of 1,4-dimethylolcyclohexane, such as that material commercially available as Jeffamine^{®} RFD-270 (from Huntsman); polyoxyalkylenedi- or-triamines obtainable as products from the amination of polyoxyalkylenedi- and -triols and which are commercially available under the name of Jeffamine@ (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine@ D-4000, Jeffamine@ T-403, Jeffamine@ T-3000, Jeffamine@ T-5000, Jeffamine@ EDR-104, Jeffamine^{®} EDR-148 and Jeffamine^{®} EDR-176, as well as corresponding amines from BASF or Nitroil.
iv) Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-amino-1-ethylpropyl)-2-methyl-1,5-pentanediamine.
v) Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-cyclohexyl-1,2-ethanediamine; 4-aminomethyl-piperidine; N-(2-aminoethyl)piperazine; N-methyl-1,3-propanediamine; N-butyl-1,3-propanediamine; N-(2-ethylhexyl)-1,3-propanediamine; N-cyclohexyl-1,3-propanediamine; 3-methylamino-1-pentylamine; 3-ethylamino-1-pentylamine; 3-cyclohexylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
vi) Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
vii) Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
viii)Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).

Exemplary compounds among the aforementioned polyamines having at least two primary aliphatic amine groups are: isophorone diamine (IPDA); hexamethylene diamine (HMDA); 1,3-bis(aminomethyl)cyclohexane; 1,4-bis(aminomethyl)cyclohexane; bis(4-amino-cyclohexyl)methane; bis(4-amino-3-methylcyclohexyl)methane; NBDA; and, ether group-containing polyamines with a number average molecular weight (Mn) of up to 500 g/mol of which commercial examples include Jeffamine@ D-230 and D-600 (available from Huntsman).

As noted above, the constituent b) of the two component (2K) composition may comprise at least one compound which has at least two reactive mercapto-groups per molecule. Suitable mercapto-group containing compounds, which may be used alone or in combination, include but are not limited to the following:
- Mercaptan-terminated polyoxyalkylene ethers, obtainable by reacting polyoxyalkylenedi- and -triols either with epichlorohydrin or with an alkylene oxide, followed by sodium hydrogen sulfide.
- Mercaptan-terminated compounds in the form of polyoxyalkylene derivatives, known under the trade name of Capcure^{®} (from Cognis), in particular the types WR-8, LOF and 3-800 thereof.
- Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
- 2,4,6-trimercapto-1,3,5-triazine, 2,2'-(ethylenedioxy)-diethanethiol (triethylene glycol dimercaptan) and / or ethanedithiol.
- Tris(2-(mercaptopropionyloxy)ethyl)isocyanate.

A preference is acknowledged for the use of polyesters of thiocarboxylic acids and, in particular, for the use of at least one of pentaerythritol tetramercapto-acetate (PETMP), tris-(3-mercaptopropionate) (TMP), trimethylolpropane trimercaptoacetate (TMPMP), tris(2-(mercaptopropionyloxy)ethyl)isocyanate and glycol dimercaptoacetate.

As further noted above, constituent b) may, in certain embodiments, comprise at least one Mannich base. Such compounds may be characterized by containing at least one phenalkamine and, in particular, a phenalkamine obtained from the condensation of cardanol (CAS Number: 37330-39-5), an aldehyde and an amine. The reactant amine in the condensation reaction is desirably ethylenediamine or diethyltriamine.

Mannich bases and phenalkamines are known in the art and suitable examples include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec).

Any common latent epoxy curing agents used in the art can be used in the present disclosure without special limitations. Exemplary latent curatives which may be used in or as constituent b) of the composition include but are not limited to: ketimines obtainable by the reaction of aliphatic polyamines and ketones; polyethyleneimines, in particular polyethyleneimines having a weight average molecular weight (Mw) from 700 to 1,000,000; imidazole derivatives such as 2-heptadeoylimidazole, 2-phenyl-4,5-dihydroxymethylimidazole, 2-phenyl-4-methyl-5-hydroxymethylimidazole, 2-phenyl-4-benzyl-5-hydroxymethyl-imidazole; 2,4-diamino-8-2-methylimidazolyl-(1)-ethyl-5-triazine; addition products of triazine with isocyanuric acid; hydrazides, such as succinohydrazide, adipohydrazide, isophtholohydrazide o-oxybenzohydrazide and salicylohydrazide.

Still further suitable latent epoxy curing agents which may be used herein are described in: US Patent No. 4,546,155; US Patent No. 7,226,976; US Patent No. 4,833,226; JP2008214567; UK Patent No. GB 1,121,196; WO2014/165423; and, US Patent No. 5,077,376. And examples of commercially available latent epoxy curing agents include Ajicure PN-23, PN-40, PN-H, MY-24 and PN-50 commercially available from Ajinomoto Co., Inc.; EH-4337S, EH-3293S and EH-4357S commercially available from Asahi Denka Co. Ltd.; Novacure HX-3722 and HXA-3921 HP commercially available from Asahi Kasei Kogyo. K.K.; and, Sunmide LH-210, Ancamin 2014AS/FG and Ancamin 2337S commercially available from Air Products and Chemicals, Inc.

In addition to the above, it is envisaged that constituent b) of the composition may comprise or consist of dicyandiamide. When employed, it is preferred that said dicyandiamide is in finely divided form: a mean volume particle size (Dv50) of from 0.5 to 100 µm, for example of from 1 to 50 µm or from 2 to 20 µm might be noted as desirable. Said particle size refers to the diameter or largest dimension of a particle in a distribution of particles and is measurable via dynamic light scattering.

### c) Accelerator

The two component (2K) composition, and more particularly the second component thereof, comprises c) at least one accelerator, which accelerator is a substance that promotes the reaction between the epoxide groups and the epoxide-reactive groups of the curative, in particular the reaction between the amine and the epoxide groups. A specific example relates to the use of an amine accelerator which functions by de-protonation of reactive thiol (-SH) groups present to thiolate (-S"), which thiolate reacts with epoxide groups by nucleophilic ring opening polymerization.

The composition may preferably comprise, based on the weight of the composition, from 0.01 to 5 wt.% of c) said at least one accelerator. In certain embodiments, the composition may comprise from 0.01 to 2 wt.%, for example from 0.01 to 1 wt.% of c) said at least one accelerator.

Without intention to the limit the accelerators used in the present disclosure, mention may be made of the following suitable accelerators: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) phenols, in particular bisphenols; ii) tertiary amines, such as 2-piperazin-1-ylethanamine, 1,4-diazabicyclo[2.2.2]octane, benzyldimethylamine, α-methylbenzyl dimethylamine, triethanolamine, dimethylamino propylamine and salts of such tertiary amines; iv) imidazoles, including imidazole, 1-methylimidazole, 2-methylimidazole, 2-ethylimidazole, 2-ethyl-4-methylimidazole, 2-undecylimidazole, 2-heptadecylimidazole, 2-phenylimidazole, 2-phenyl-4-methylimidazole, 2-phenyl-4,5-dihydroxymethylimidazole, 2-phenyl-4-methyl-5-hydroxymethylimidazole, 1-cyanoethyl-2-undecylimidazole, 1-cyanoethyl-2-ethyl-4-imidazole, 2-phenylimidazole, 1-benzyl-2-phenylimidazole, benzimidazole, 2-phenyl-4, 5-dihydroxymethylimidazole, and 2, 3-dihydro-1H-pyrrolo [1,2-a] benzimidazole, 1-vinylimidazole and N-(3-aminopropyl)imidazole; v) quaternary ammonium salts, such as benzyltrimethyl ammonium chloride; vi) amidines, such as 1,8-diazabicyclo[5.4.0]undec-7-ene; vii) urea derivatives; viii) thiourea derivatives; ix) guanidines, such as 1,1,3,3-tetramethylguanidine; x) phenol resins; and, xi) phosphites, such as di- and triphenylphosphites.

For surety, it is noted that the constituent c) may comprise an encapsulated imidazole compound, such as an encapsulated form of one of the above mentioned imidazole compounds. The encapsulated imidazole may be in the form of particles have a mean volume particle size (Dv50) of from 1 to 50 microns, for example from 1 to 20 microns. The latency provided by the encapsulation may serve to improve the storage stability of the two component (2K) composition. Exemplary commercially available encapsulated imidazole compounds include: HX3941HP, HX A3042HP, HX A3922HP, HX A3792, HX A3748, HX3721, HX3722, HX3088, HX3741, HX3742, HX3713, HX3742, and HX3613 manufactured by Asahi Company; and, Technicure LC80, available from A&C Catalysts Inc.

The skilled artisan will recognize that the selection of an accelerator is not simply concerned with adding the fastest accelerator. Other factors determinative in the selection of accelerators include: cost; toxicity; solubility; processing effects, such as working time, premature gelation, exothermic degradation, expansion and off-gassing; final properties, such as glass transition temperature (T_{g}), modulus, strength, elongation at break and chemical resistance; regulatory concerns; and, ease of use.

In embodiments of the present disclosure, constituent d) comprises or consists of at least one accelerator selected from the group consisting of: tertiary amines; urea derivatives; thiourea derivatives; and, amidines. In particular, the cure accelerator d) may comprise or consist of at least one urea derivative of Formula (V) or Formula (VI): 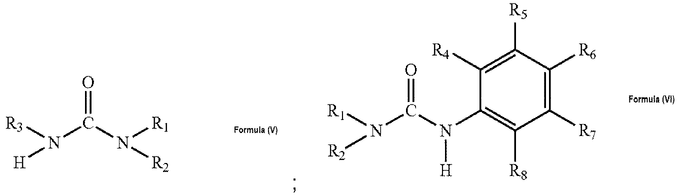 wherein:
at least one residue R¹, R², R³ is not hydrogen;
R¹ and R² are independently selected from hydrogen, C₁-C₁₈ alkyl and C₃-C₁₈ cycloalkyl;
R³ is hydrogen, C₁-C₁₈ alkyl, C₃-C₁₈ cycloalkyl, C₆-C₁₈ aryl, C₆-C₁₈ aralkyl, C₆-C₁₈-alkylaryl, C₁-C₁₈ alkyl substituted with -NHC(O)NR¹R², C₃-C₁₈ cycloalkyl substituted with - NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R²; and,
R⁴, R⁵, R⁶, R⁷ and R⁸ are independently selected from hydrogen, halogen, C₁-C₁₈ alkyl, C₃ to C₁₈ cycloalkyl, C₆-C₁₈ aryl, C₆-C₁₈ aralkyl, C₆-C₁₈-alkylaryl , -CF₃, -NHC(O)NR¹R², C₁-C₁₈ alkyl substituted with -NHC(O)NR¹R², C₃-C₁₈ cycloalkyl substituted with - NHC(O)NR¹R², C₆-C₁₈ aryl substituted with -NHC(O)NR¹R²; C₆-C₁₈ aralkyl substituted with -NHC(O)NR¹R²; and, C₆-C₁₈ aralkyl substituted with -NHC(O)NR¹R².

The substituents (R¹-R⁸) of the urea derivative of Formulae (V) and (VI) should be selected to ensure any said derivative(s) is liquid at room temperature and 1 atmosphere pressure and has a viscosity of less than 1 Pa.s, preferably less than 100 mPa.s at 25°C. Additional to those considerations, it is preferred that the urea derivatives of Formulae (V) and (VI) meet the following conditions:
at least one residue R¹, R², R³ is not hydrogen;
R¹ and R² are independently selected from hydrogen and C₁-C₄ alkyl; and,
R⁴, R⁵, R⁶, R⁷ and R⁸ are independently selected from hydrogen, halogen, C₁-C₄ alkyl and - NHC(O)NR¹R².

A particular reference to the use of N,N-diethylurea, N,N-dipropylurea, N,N-ethyl-methylurea, N,N-dimethylurea, 1,1'-(4-methyl-m-phenylene)-bis-(3,3-dimethylurea) or 1,1'-(2-methyl-m-phenylene)-bis-(3,3-dimethylurea) may be made.

Further, exemplary commercially available urea derivatives having utility in the present disclosure include: Omicure U-24, Omicure U-35, Omicure U-410, Omicure U-52, Omicure U-415 and Omicure U-405, available from CVC Corporation; Amicure UR, Amicure UR7/10, Amicure UR200, Amicure UR300, Amicure UR500, Amicure UR2T, Amicure UR41 and Amicure UR-D, available from The Air Product Corporation; and, Dyhard UR200, Dyhard UR300, Dyhard UR500, Dyhard UR700 and Ecure 30, available from Alzchem Corporation.

### d) Particulate Liquid-absorbent Polymer

The two component (2K) composition comprises d) at least one particulate liquid-absorbent polymer. The constituent polymers of which the liquid-absorbent particles may comprise should typically be devoid of pendant reactive groups: the polymers should not thereby participate in the curing or crosslinking reactions of the two component (2K) composition or thereby be chemically bonded within the resultant polymer matrix obtained upon curing. As such, the particles of constituent d) may be blended into the first component, the second component or both of said first and second components.

The polymers of which constituent d) may comprise should absorb liquids, for instance aqueous liquids such as the debonding solution described herein below. The particles therefore provide for the ingress of liquids into the matrix obtained upon curing of the two component (2K) composition. The particulates swell upon absorption of liquids and thereby create stresses within that matrix: where that matrix provides the adhesive layer of a bonded article, such stresses promote erosion of that layer.

Many particulate liquid-absorbent polymers tend to form gelatinous masses upon absorption of aqueous liquids. Care must be taken in the selection of the amount, morphology, physical properties and type of particulate polymer to control the phenomenon of gel blocking whereby the particles of material deform during swelling and gelation and block the interstitial spaces between particles thus preventing the ingress of further liquid.

In important embodiments, the two component (2K) composition may comprise, based on the weight of the composition, from 1 to 50 wt.% of d) said at least one particulate liquid-absorbent polymer. It is preferred that the two component (2K) composition comprises from 1 to 25 wt.% or from 5 to 25 wt.% of d) said at least one particulate liquid-absorbent polymer, based on the weight of the composition.

Broadly, there is no particular intention to limit the shape of the particles employed as liquid-absorbent polymers: particles that are fibrous, acicular, rod-like, spherical, ellipsoidal, cylindrical, bead-like, cubic or platelet-like may be used alone or in combination. Moreover, it is envisaged that agglomerates of more than one particle type may be used: agglomerates may be composed of the same polymer provided in different particle morphologies and / or may be composed of particles of more than one polymer type.

There is also no particular intention to limit the size of the particles employed as liquid-absorbent polymers. However, the or each particulate liquid-absorbent polymer should conventionally have a mean volume particle size (Dv50), as measured in its dry state by dynamic light scattering, of from 0.1 to 1000 µm, for example from 0.1 to 500 µm or from 0.1 to 250 µm. The term *"dry state"* herein references polymer particles of which the moisture content is less than 5 wt.%.

Independently of or additional to this particle size property, the or each particulate polymer may be characterized by at least one of: a shear modulus of less than or equal to 1000 Pascals, preferably from 250 to 1000 Pa or from 500 to 1000 Pa, as determined at room temperature in accordance with ASTM E143-20 *Standard Test Method for Shear Modulus at Room Temperature;* and, a centrifuge retention capacity of from 5 to 50 g/g, preferably from 10 to 50 g/g or from 20 to 50 g/g, as determined at room temperature according to EDANA WSP 241.2. using an aqueous solution containing 0.9 wt.% NaCl. It is noted that the present disclosure thereby envisages the use in or as constituent d) of at least one superabsorbent polymer, by which is meant a polymer capable of absorbing at least 10 times its weight of said aqueous solution containing 0.9 wt.% NaCl in water.

Exemplary liquid-absorbent polymers having utility in the present disclosure include: synthetic polymers; natural polymers; and, modified natural polymers, which may be chemically and / or physically modified natural polymers.

Illustrative natural and modified natural polymers include but are not limited to: agar; cellulose; alkyl modified cellulose, in particular methyl cellulose; hydroxyalkyl-modified cellulose, in particular hydroxyethyl cellulose and hydroxypropyl cellulose; cellulose sulfate; carboxyalkyl-modified cellulose, in particular carboxymethyl cellulose and sodium carboxymethyl cellulose; gums, such as linseed gum, xanthan gum, gum arabic, guar gum, tragacanth gum and acacia gum; alginic acid; hyaluronic acid; pectin; carboxyalkyl starch; and, hydrolyzed starch acrylonitrile graft polymers. Arbocel TF0415, available from Rettenmaier & Sohne GmbH & Co. KG may be mentioned as an exemplary commercially available modified natural polymer.

Illustrative synthetic polymers include but are not limited to: polyacrylates; sulfonated polystyrene; polyvinyl alcohol (PVA); polyethylene oxides; polyvinylpyrolidine; polyacrylonitriles; polyacrylamide; and, hydrolyzed polyacrylamide. As exemplary commercially available synthetic liquid-absorbent polymers mention may be made of: polymers under the Saviva brand, available from BASF; and, polymers under the Favor brand, available from Evonik Industries.

### e) Additives and Adjunct Ingredients

The compositions which provide the first adhesive of the present disclosure - as exemplified by the two-component (2K) epoxide composition - will typically further comprise adjuvants and additives that can impart improved properties to these compositions. For instance, the adjuvants and additives may impart one or more of: improved adhesion to substrates; reduced corrosivity towards the substrate surface; improved elastic properties; improved elastic recovery; longer enabled processing time; faster curing time; lower residual tack and, improved levelling. Included among such adjuvants and additives are: adhesion promoters; corrosion inhibitors; cure retarders; surfactants, for which a preference for non-ionic surfactants may be mentioned; wetting agents; plasticizers; stabilizers; tougheners; colorants; rheology control agents; biocides; flame retardants; solvents; and, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 30 wt.% of the total composition and preferably should not comprise more than 20 wt.% of the composition.

For completeness, it is noted that, in general, adjunct materials and additives which contain reactive groups will be blended into the appropriate component of a two-component (2K) composition to ensure the storage stability thereof. Unreactive materials may be formulated into either or both of the two components.

The presence of tougheners in the composition - in an amount up to 10 wt.%, based on the weight of the composition - can, in certain circumstances, be advantageous to the debonding of the obtained cured adhesive. Without intention to be bound by theory, tougheners can facilitate phase separation within the cured adhesive when actuating thermal conditions are applied. Exemplary tougheners may be selected from: epoxy-elastomer adducts; and, toughening rubber in the form of core-shell particles dispersed in the epoxy resin matrix.

Elastomer-containing adducts may be used individually or a combination of two or more particular adducts might be used. Moreover, each adduct may independently be selected from solid adducts or liquid adducts at a temperature of 23°C. Typically, useful adducts will be characterized by a ratio by weight of epoxy to elastomer of from 1:5 to 5:1, for example from 1:3 to 3:1. And an instructive reference regarding suitable epoxy / elastomer adducts is US Patent Publication 2004/0204551. Moreover, exemplary commercial epoxy/elastomer adducts for use herein include but are not limited to: HYPDX RK8-4 commercially available from CVC Chemical; and, B-Tough A3 available from Croda Europe Limited.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20⁰C or lower, more preferably -40⁰C or lower and even more preferably -60⁰C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the invention, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present invention, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

It is preferred that any included core-shell rubber particles have a mean volume particle size (Dv50) of from 10 to 300 nm, for example from 50 to 250 nm: said particle size refers to the diameter or largest dimension of a particle in a distribution of particles and is measured via dynamic light scattering. For completeness, the present application does not preclude the presence of two or more types of core shell rubber (CSR) particles with different particle size distributions in the composition to provide a balance of key properties of the resultant cured product, including shear strength, peel strength and resin fracture toughness.

The core-shell rubber may be selected from commercially available products, examples of which include: Paraloid EXL 2650A, EXL 2655 and EXL2691 A, available from The Dow Chemical Company; Clearstrength^{®} XT100, available from Arkema Inc.; the Kane Ace^{®} MX series available from Kaneka Corporation, and in particular MX 120, MX 125, MX 130, MX 136, MX 551, MX553; and, METABLEN SX-006 available from Mitsubishi Rayon.

The addition of certain additives may promote the adhesion of the two-component (2K) composition - and the cured adhesive obtained therefrom - to particular substrates. In this regard, the curable composition may comprise from 0 to 5 wt.%, for example from 0.5 to 5 wt.% based on the weight of the composition, of at least one adhesion promoter.

In certain embodiments, the adhesion promoter may be selected from the group consisting of: morin(2-(2,4-dihydroxy phenyl)-3,5,7-trihydroxy-4H-1-cumarone-4-ketone); 3,7-dihydroxy-2-naphthoic acid (3,7-dihydroxy naphthlene-2-carboxylic acid); pyrogallol carboxylic acid (2,3,4-trihydroxybenzoic acid); 3,4-dihydroxy-benzene guanidine-acetic acid; gallic acid (3,4,5-trihydroxybenzoic acid); para-aminosalicylic acid (4-amino-2-hydroxybenzoic acid, PAS); flutter acid (4,4'-methylene-bis(3-hydroxy-2-naphthoic acid)); citric acid (2-hydroxypropane-1,2,3-tricarboxylic acid); and, mixtures thereof. Of these compounds a preference for the use - alone or in combination - of citric acid, gallic acid and, in particular, para-aminosalicylic acid (PAS) may be mentioned.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

A *"plasticizer"* for the purposes of this disclosure is a substance that decreases the viscosity of the curable composition and thus facilitates its processability. Herein the plasticizer may constitute up to 20 wt.%, for example from 1 to 10 wt.% or from 1 to 7 wt.%, based on the total weight of the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

Exemplary commercially available plasticiser for use in the present disclosure include but are not limited to: Lupranol 1000/1, available from BASF; Caradol ED 56-300 available from Shell; Arcol PPG 2000 available from Covestro; Voranol 2000 L available from DOW; and, Jeffol PPG 2000 available from Huntsman.

*"Stabilizers"* for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

The term *"colorant"* as used herein refers to any substance that imparts one or more of color, opacity or a visual effect to the composition. Visual effects which may be imparted to the composition by the colorant, in addition to or independently of color, include: reflectance; pearlescence; sheen; texture; phosphorescence; fluorescence; photochromism; photosensitivity; thermochromism; and, goniochromism. The term *"colorant"* is intended to encompass: organic pigments; inorganic pigments; dyes; and, tints. More than one colorant may be included in the composition and it is considered that each added colorant can independently be added in any suitable form, of which mention may be made of discrete particles, dispersions and solutions.

The curable composition of the present disclosure may comprise a rheology control agent. Said rheology control agent should preferably consist of: electrically non-conductive fillers; electrically conductive fillers; or, mixtures thereof.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have a median volume particle size (Dv50), as measured by dynamic light scattering, of from 0.1 to 1500 µm, for example from 1 to 1250 µm.

Exemplary non-conductive fillers include but are not limited to calcium carbonate, calcium oxide, calcium hydroxide (lime powder), precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

When present, pyrogenic and/or precipitated silica should desirably have a BET surface area of from 10 to 90 m²/g: when such silicas are used, they do not cause any additional increase in the viscosity of the applied composition, but do contribute to strengthening the cured adhesive obtained therefrom. It is likewise conceivable to use pyrogenic and/or precipitated silica having a higher BET surface area, advantageously from 100 to 250 m²/g as a filler: because of the greater BET surface area, the effect of strengthening the cured composition is achieved with a smaller proportion by weight of silica.

Also suitable as non-conductive fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the composition from which the adhesive is cast may be preferred for many applications: such fillers are also described as rheological adjuvants, e.g. hydrogenated castor oil, fatty acid amides, or swellable plastics such as PVC.

There is equally no particular intention to limit the shape of the particles which may be employed as conductive fillers: particles that are acicular, spherical, ellipsoidal, cylindrical, bead-like, cubic or platelet-like may be used alone or in combination. Moreover, it is envisaged that agglomerates of more than one particle type may be used. Moreover, there is no particular intention to limit the size of the particles employed as conductive fillers. However, such conductive fillers will conventionally have a median particle size by volume (Dv50), as measured by dynamic light scattering, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; carbon nanostructures; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; and, mixtures thereof. The use of particulate silver and / or carbon black as the conductive filler is preferred.

The desired viscosity of the curable, liquid-state composition may be determinative of the total amount of rheology control agent used. Having regard to that consideration, the total amount of rheology control agent present should not prevent the composition from being readily applicable by the elected method of application of the composition. For example, compositions which are intended to be extrudable from a suitable dispensing apparatus, such as a tube, should possess a viscosity of from 1000 to 150,000, preferably from 10,000 to 100,000 mPas.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and, sulfonamides.

The above aside, it is preferred that said non-reactive diluents constitute less than 10 wt.%, in particular less than 5 wt.% or less than 2 wt.%, based on the total weight of the composition.

### Formation of the Two-Component (2K) Composition

For the two component (2K) curable, liquid-state compositions, the reactive components are brought together and mixed in such a manner as to induce the hardening thereof. The reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale applications in which volumes of less than 2 liters will generally be used, the preferred packaging for the two-component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case, the two components are extruded via hydraulic presses, in particular by way of follower plates, and are supplied via pipelines to a mixing apparatus which can ensure fine and highly homogeneous mixing of the first and second components. In any event, for any package it is important that the binder (*first*) component be disposed with an airtight and moisture-tight seal, so that both components can be stored for a long time, ideally for 12 months or longer.

Non-limiting examples of two-part dispensing apparatuses and methods that may be suitable for the present disclosure include those described in U.S. Patent No. 6,129,244 and US Patent No. 8,313,006.

### Methods of Forming the Bonded Article

Most broadly, the bonded articles are formed by: applying the aforementioned layers of the first and second adhesives to two distinct surfaces of the substrate or substrates; and, contacting the surfaces with the applied adhesive layers disposed therebetween under pressure to form the bond.

The adhesive composition which is to provide the first adhesive layer (20, 21) - more particularly the above described two-component (2K) composition - is applied to the substrate surface(s) and then cured or solidified *in situ.* Prior to applying the composition, it is often advisable to pre-treat the relevant surfaces. Any such pre-treatment should comprise at least one of: cleaning the surface(s); abrading the surface(s); and, applying an anti-corrosion coating or applying a conversion coating or conversion treatment thereto.

Cleaning serves to remove foreign matter from the surface. Cleaning treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

The terms *"conversion coating"* and *"conversion treatment"* refer to a treatment of the surface of a substrate which causes the surface material to be chemically converted to a different material. Typically, a metal or alloyed surface, presenting the defect area, is chemically converted to provide a tightly adherent coating, all or part of which consists of a stabilized form - for instance an oxidized form - of the substrate metal. Such chemical conversion coatings can demonstrate high corrosion resistance as well as providing a strong bonding affinity for subsequent coating layers.

The curable compositions are then applied to the preferably pre-treated surfaces by conventional application methods such as: dipping; immersion; brushing; roll coating; bar coating; doctor-blade application; printing methods; and, spraying methods, including but not limited to air-atomized spray, air-assisted spray, airless spray and high-volume low-pressure spray.

It is recommended that the compositions - as exemplified by the above-described two-component (2K) composition - be applied to a surface at a wet film thickness of from 10 to 1000 µm, for example from 10 to 500 µm or from 30 to 300 µm. The application of thinner layers within this range is more economical and provides for a reduced likelihood of deleterious thick cured regions. However, great control must be exercised in applying thinner coatings or layers so as to avoid the formation of discontinuous cured films.

The curing of the applied compositions of the disclosure typically occurs at temperatures in the range of from 20°C to 120°C, preferably from 20°C to 120°C, and in particular from 20°C to 80°C. The temperature that is suitable depends on the specific compounds present and the desired drying and curing rate and can be determined in the individual case by the skilled artisan, using simple preliminary tests if necessary. Of course, drying and curing at lower temperatures within the aforementioned ranges is advantageous as it obviates the requirement to substantially heat or cool the mixture from the usually prevailing ambient temperature. Where applicable, however, the temperature of the mixture formed from the respective elements of the composition may be raised above the mixing temperature and / or the application temperature using conventional means including microwave induction, ovens and drying booth. The elevated temperature may be maintained for up to 180 minutes to ensure complete curing.

The application method of the present disclosure may further comprise reducing the oxygen content in the environment of the curing material: this may done by introducing nitrogen (N₂) gas into the curing environment. This step is however not necessary for the formation of a robust coating.

The cured or solidified adhesive composition should fill the defect area and any further minor flaws in the surface of the substrate and thereby present a smooth surface for the application of subsequent adhesive layer(s). It is not precluded that the composition of the present disclosure may be applied in a number of coats, which are independently cured, to attain the desired layer thickness and to cover surface imperfections.

For completeness, the present disclosure also concerns a method of disposing multiple layers of adhesive between the substrate(s) to be bonded. In important embodiments, the method comprises, as one of the constituent steps, the application of the two-component (2K) composition as defined hereinabove to at least one substrate surface as a primer. More particularly, the method of preparing the multilayer adhesive may desirably incorporate the steps of: I) providing a metallic substrate; II) applying a first layer of a two-component (2K) composition as defined hereinabove onto said metallic substrate; III) at least partially curing that first layer; IV) applying a second layer of a second curable adhesive composition on the at least partially cured first layer; and, V) at least partially curing that second layer. In an iterative process, steps II) to V) may be performed and repeated so as to dispose third, fourth and further layers on the metallic substrate. There is no particular intention to limit the type of adhesive compositions which may be applied in step IV): both water-borne and solvent borne adhesive compositions are envisaged.

As used herein, the term *"at least partially cured"* means that curing of the curable composition has been initiated and that, for example, cross-linking of components of the composition has commenced. The term encompasses any amount of cure upon application of the curing condition, from the formation of a single cross-link to a fully cross-linked state. Obviously, the rate and mechanism with which the composition cures is contingent on various factors, including the components thereof, functional groups of the components and the parameters of the curing condition.

At least partial solidification of a given adhesive layer is generally indicative of cure or drying. However, both drying and cure may be indicated in other ways including, for instance, a viscosity change of the adhesive layer, an increased temperature of the adhesive layer and / or an opacity change of that adhesive layer.

It may be desirable for the or each step IV) of the above described exemplary application process to be commenced only when the at least partially cured or partially dried preceding layer can substantially retain its shape upon exposure to ambient conditions. By *"substantially retain its shape"* is meant that at least 50% by volume, and more usually at least 80% or 90% by volume of the at least partially cured or dried layer retains its shape and does not flow or deform upon exposure to ambient conditions for a period of 5 minutes. Under such circumstances, gravity should not therefore substantially impact the shape of the at least partially cured or partially dried layer upon exposure to ambient conditions.

For completeness, the shape of the at least partially dried or at least partially cured layer will impact whether said layer substantially retains its shape. For example, when said layer is rectangular or has another simplistic shape, the at least partially cured or dried layer may be more resistant to deformation at even lesser levels of cure or even lesser degrees of drying than layers having more complex shapes.

In certain embodiments, the application of a subsequent adhesive layer (*step IV*)) occurs before an at least partially cured layer has reached a final cured state, nominatively while the layer is still *"green".* In such embodiments, application of the layers may be considered *"wet-on-wet'* such that the adjacent layers at least physically bond, and may also chemically bond, to one another. For example, it is possible that components in each of the first and subsequent layers can chemically cross-link/cure across the application line, which effect can be beneficial to the longevity, durability and appearance of the finished article. Importantly, the distinction between partial cure and a final cured state is whether the partially cured layer can undergo further curing or cross-linking. This does not actually preclude functional groups being present in the final cure state but such groups may remain un-reacted due to steric hindrance or other factors.

In the aforementioned iterative process, the thickness, width, shape and continuity of each layer may be independently selected such that the or each preceding and subsequent layer may be the same or different from one another in one or more of these regards. For example, a given subsequent layer may only contact a portion of an exposed surface of the at least partially cured or dried preceding layer: depending on the desired shape of the adhesive layer, the subsequent layer may build on that layer selectively.

### B) DEBONDING SOLUTION

The debonding solution of the present disclosure has a pH of from 3 to 14 and comprises:
i) at least one compound selected from the group consisting of: C₁₀ to C₂₆ fatty acid; C₁₀ to C₂₆ fatty acid salts; and, C₁-C₄ alkyl esters of C₁₀ to C₂₆ fatty acids; and,
ii) a polar solvent.

### i) Fatty Acid and Esters Thereof

As noted above, the solution necessarily comprises i) at least one compound selected from the group consisting of: C₁₀ to C₂₆ fatty acid; C₁₀ to C₂₆ fatty acid salts; and, C₁-C₄ alkyl esters of C₁₀ to C₂₆ fatty acids. The solution should desirably comprise, based on the weight of the solution, from 5 to 30 wt.% of i) said at least one compound. And exemplary solutions may comprise from 5 to 25 wt.% or from 10 to 25 wt.% of i) said least one compound.

The constituent fatty acid of the solution or, where applicable, the fatty acid from which the or each ester is derived, may be a saturated, mono-unsaturated or polyunsaturated linear, aliphatic acid of which examples include: decanoic acid (*capric acid*); dodecanoic acid (*lauric acid*), tetradecanoic acid (*myristic acid*); pentadecanoic acid; hexadecanoic acid (*palmitic acid*); heptadecanoic acid (*margaric acid*); octadecanoic acid (stearic acid or isostearic acid); octadecenoic acids (*oleic acid, linoleic acid* or *linolenic acid*); hydroxyoctadecenoic acid (*ricinoleic acid*); eicosanoic acid (*arachidic acid*); and, docosanoic acid (*behenic acid*).

A preference may be noted for the use in the solution of C₁₄-C₂₀ monounsaturated fatty acids and / or the C₁-C₄ alkyl esters thereof. Independently of or additional to this preferred selection of the fatty acid, a preference may also be noted for the use of C₁-C₂ alkyl esters and, more particularly, methyl esters.

In an important embodiment, part i) of the solution comprises or consists of at least one compound selected from the group consisting of C₁₆-C₁₈ monounsaturated fatty acids and C₁-C₄ alkyl esters of C₁₆-C₁₈ monounsaturated fatty acids. Good results have been obtained where part i) of the composition comprises or consists of at least one compound selected from the group consisting of oleic acid and C₁-C₄ alkyl esters of oleic acid. For example, the composition may comprise or consist of at least one compound selected from the group consisting of oleic acid and C₁-C₂ alkyl esters. The use of oleic acid and / or methyl oleate as or in part i) of the solution may be particularly beneficial.

It will be recognized that fatty acids are normally obtained by the hydrolysis of naturally occurring triglycerides, such as coconut oil, rape seed oil, palm oils, tallow, lard and fish oils. The hydrolysis yields mixtures of fatty acids, which mixtures could have utility *per se* in the present debonding solution. However, where specific individual fatty acids are required as components of the solution - such as oleic acid for example - those acids may be obtained from the technical mixtures by an appropriate separation step, such as distillation, nanofiltration, membrane separation and separation via ion exchange resin.

### ii) Polar Solvent

The debonding solution comprises polar solvent. Exemplary compounds which may constitute the polar solvent, either independently or in combination, include but are not limited to: water; C₁-C₈ alkanols, such as ethanol; benzyl alcohol; acetonitrile; N,N-di(C₁-C₄)alkylacylamides, such as N,N-dimethylformamide (DMF) and N,N-dimethylacetamide (DMAc); hexamethylphosphoramide; N-methylpyrrolidone; pyridine; mono-C₁₋₄-alkyl ethers of diols having from 2 to 12 carbon atoms, such as ethylene glycol mono-(C₁-C₄)-alkyl ethers, propylene glycol mono-(C₁-C₄)alkyl ethers and in particular ethylene glycol monomethyl ether, ethylene glycol monobutyl ether, propylene glycol monomethyl ether, propylene glycol monopropyl ether, propylene glycol monobutyl ether; di(C₂-C₃)alkylene glycol mono-(C₁-C₄)alkyl ethers, such as diethylene glycol monomethyl ether, diethylene monobutyl ether, dipropylene glycol n-propyl ether, dipropylene glycol monopropyl ether and dipropylene glycol monobutyl ether; polyalkylene glycol dialkyl ethers; monoesters, such as (C₁-C₈)alkyl acetates, ethoxydiglycol acetate, ethyl lactate, benzyl benzoate, butyloctyl benzoate and ethylhexyl benzoate; dibasic esters such as dimethyl succinate, dimethyl glutarate, dimethyl maleate, dimethyl adipate, dipropyl oxalate; ketones, such as acetone, ethyl ketone, methyl ethyl ketone (2-*butanone*) and methyl isobutyl ketone; ethers, such as tetrahydrofuran (THF), 2-methyltetrahydrofuran (2-MeTHF) and 1,2-dimethoxyethane; 1,3-dioxolane; dimethylsulfoxide (DMSO); and, dichloromethane (DCM).

Good results have been obtained where the polar solvent comprises or consists of at least one compound selected from the group consisting of: water; polyalkylene glycol dialkyl ethers, in particular diethylene glycol dimethyl ether (*diglyme*) or dipropylene glycol dimethyl ether (DPGDME); and, dibasic esters. For completeness, an exemplary commercial dibasic ester solvent is Imsol R, a mixture of dimethyl succinate, dimethyl glutarate and dimethyl adipate, available from Invista.

### iii) pH Control Agent

As noted above, the debonding solution should possess a pH of from 3 to 14, preferably from 3 to 7 or from 3 to 6. A pH control agent represents an optional ingredient of the debonding solution, whereby the pH of the debonding solution is determinative of any added amount of pH control agent. Broadly, the pH control agent is selected from acidic substances and basic substances. For surety, an added pH control agent is distinct from component i) of the solution.

Exemplary acidic substances, which may be added alone or in combination, include, but are not limited to: mineral acids; monocarboxylic acids of the formula R^{m}CO₂H, wherein R^{m} is C₁-C₆ alkyl or C₃-C₆ cycloalkyl group; polycarboxylic acids of the formula R^{p}(CO₂H)ₙ, wherein n is 2 or 3 and R^{p} is C₁-C₆ alkylene or C₃-C₆ alkylene; and, α-hydroxycarboxylic acid(s).

Having regard to mineral acids, the use of nitric acid is not precluded but is not preferred; conversely, the addition of at least one of phosphoric acid, phosphonic acid, sulphurous acid, sulphuric acid, hydrochloric acid and hydrobromic acid is considered to be suitable.

Non-limiting examples of monocarboxylic acids include: formic acid; acetic acid; propionic acid; butyric acid; valeric acid; hexanoic acid; cyclohexanecarboxylic acid; cyclopentanecarboxylic acid; and, cyclobutanecarboxylic acid. Formic acid, acetic acid and propionic acid are considered particularly suitable for use herein.

Illustrative α-hydroxycarboxylic acids are those represented by the general formula (III):

R^{h}CH(OH)COOH (III)

wherein: R^{h} represents a hydrogen atom, a C₁-C₄ alkyl group, a C₂-C₆ alkenyl group, a C₁-C₆ alkoxy group, a C₃-C₆ cycloalkyl group or a C₆-C₁₀ aryl group.

Suitable α-hydroxycarboxylic acids include but are not limited to: glycolic acid; lactic acid (2-*hydroxypropanoic acid*); 2-hydroxybutanoic acid; 2-hydroxypentanoic acid; 2-hydroxyhexanoic acid; glucuronic acid; citric acid; mandelic acid; galacturonic acid; ribonic acid (*2,3,4,5-tetrahydroxypentanoic acid);* gluconic acid (*2S,3S,4R,5S)-2,3,4,5,6-pentahydroxyhexanoic acid*); tartronic acid; tartaric acid; and, malic acid.

Exemplary basic compounds, which may be added to the debonding solution alone or in combination, include, but are not limited to: amine bases; alkali metals; alkaline earth metals; alkali metal (C₁-C₄)alkoxides; alkaline earth metal (C₁-C₄) alkoxides; alkali metal carbonates; alkaline earth metal carbonates; alkali metal hydroxides; alkaline earth metal hydroxides; alkali metal hydrides; and, alkaline earth metal hydrides.

The term *"amine base"* as used herein includes to reference: ammonia (NH₃); primary amines (NH₂R^{a}); secondary amines (NHR^{a}R^{b}); and, tertiary amines (NR^{a}R^{b}R^{c}), wherein R^{a}, R^{h} and R^{c} are each independently selected from alkyl, hydroxyalkyl, cycloalkyl, alkenyl, cycloalkenyl, aryl, alkaryl, aralkyl and heteroaryl or wherein R^{a} and R^{h} together may form a carbocyclic or heterocyclic ring.

In accordance with embodiments of the disclosure, the pH control agent comprises at least one amine base selected from the group consisting of: ammonia; primary amines of the formula (NH₂R^{a}); secondary amines of the formula NHR^{a}R^{b}; and, tertiary amines of the formula NR^{a}R^{b}R^{c}, wherein R^{a}, R^{b} and R^{c} are each independently selected from C₁-C₆ alkyl, C₁-C₆ hydroxyalkyl, C₃-C₆ cycloalkyl, or C₆-C₁₈ aryl, or wherein R^{a} and R^{b} together form a carbocyclic or heterocyclic ring having from 4 to 8 constituent atoms.

Exemplary amine bases having utility herein include: methylamine; ethylamine; propylamine; n-butylamine; dimethylamine; diethylamine; triethylamine; cyclohexylamine; N,N-diethylethanolamine; diethanolamine; triethanolamine; aniline, p-chloroaniline; N,N-dimethylaniline; benzylamine; piperidine; piperazine, 1-methylpiperazine, 1,4-dimethylpiperazine, and, imidazole.

An aqueous debonding solution may, in certain circumstances, contain a water-soluble buffer which serves to maintain the solution within a desired pH range, which range will be determined by the operative pH of the debonding treatment. For example, the following water-soluble buffers may have utility herein: for the maintenance of a pH of from 4 to 5.5, an acetate buffer; for the maintenance of a pH of from 6 to 8, a phosphate buffer; and, for the maintenance of a pH of 9, a glycine-sodium hydroxide buffer. With regard to an operating pH of from 6 to 8, suitable phosphate buffers include, but are not limited to: sodium phosphate; potassium phosphate; orthophosphoric acid (H₃PO₄); ammonium phosphate (NH₄H₂PO₄); and, ammonium phosphate, dibasic ((NH₄)₂HPO₄).

The amount of water-soluble buffer added to the aqueous debonding solution should be effective to maintain the pH in the desired pH range. For instance, the water-soluble buffer may be added to the slurry in an amount of from 1 to 1000 ppm by weight or from 1 to 500 ppm by weight, based on the total weight of the aqueous slurry.

### iv) Surfactants

The present debonding solutions may optionally comprise at least one surfactant selected from: anionic surfactants; cationic surfactants; zwitterionic surfactants; non-ionic surfactants; and, mixtures thereof. The solution may, for example, comprise *in toto* from 0.5 to 50 wt.% or from 0.5 to 40 wt.%, of surfactants, based on the total weight of the composition. For surety, said at least one surfactant is distinct from component i) of the composition.

In an embodiment, the surfactant(s) included in the solution comprise, consist essentially or consist of non-ionic surfactant. The or each surfactant included in the composition may, in an embodiment, be non-ionic. Non-ionic surfactants used in the composition may be characterized by a number average molecular weight (Mn) of from 2000 to 20000 daltons, for example from 2000 to 10000 daltons or from 2000 to 8000 daltons. Exemplary non-ionic surfactants include: polyethylene oxides, such as PEG 300 or PEG 400; fatty alcohols; primary alcohol (C₂-C₄)alkoxylates; secondary alcohol (C₂-C₄)alkoxylates; alkylphenol (C₂-C₄)alkoxylates; alkylamino (C₂-C₄)alkoxylates; amine polyglycol condensates, such as Triton^{®} CF-32 available from Union Carbide; polyoxy(C₂-C₃)alkylene fatty acid esters; polysorbates; sodium lauryl sulfate; sorbitan monolaurate; sorbitan monooleate; sorbitan monopalmitate; sorbitan trioleate; and, silicone surfactants, such as silicone polyether copolymers. The use of non-ionic silicone surfactants is not preferred, however.

Commercial examples of suitable non-ionic surfactants include: Lutensol ON 70, an ethoxylated (7EO) isodecyl alcohol, available from BASF; and, Lutensol TO 5C, an ethoxylated (5EO) saturated iso-C₁₃ alcohol, available from BASF.

In an embodiment, the surfactant(s) included in the debonding solution comprise, consist essentially or consist of anionic surfactant. The or each surfactant included in the solution may, in an embodiment, be anionic. Anionic surfactants used in the solution may be characterized by a number average molecular weight (Mn) of from 200 to 5000 daltons, for example from 200 to 2000 daltons. Moreover, anionic surfactants may be linear, partially branched, branched, or mixtures thereof.

The anionic surfactants may exist in an acid form or, alternatively, the acid form may be partly or wholly neutralized to form a surfactant salt. Typical agents for neutralization include: metal counterion bases, such as alkali metal hydroxides; ammonia; amines; or, alkanolamines of which non-limiting examples include monoethanolamine, diethanolamine, triethanolamine, 2-amino-1-propanol, 1-aminopropanol, monoisopropanolamine and 1-amino-3-propanol. It is noted that amine or alkanolamine neutralization may be effected to a full or partial extent. For instance, part of the anionic surfactant may be neutralized with metal counterion bases and part of the anionic surfactant may be neutralized with amines or alkanolamines.

Non-limiting examples of suitable anionic surfactants include: alkoxylated alkyl sulfate, in particular (C₂-C₃)alkoxylated (C₁₂-C₃₀)alkyl sulfate surfactants and more particularly the water-soluble salts thereof; non-alkoxylated alkyl sulfates, including sulfated C₈-C₂₀ fatty alcohols and 2-alkyl branched primary alkyl sulfates; alkyl benzene sulfonates, in particular (C₈-C₁₈)alkyl benzene sulfonates and more particularly linear (C₈-C₁₈)alkyl benzene sulfonates; methyl ester sulfonates; paraffin sulfonates; α-olefin sulfonates; internal olefin sulfonates; and, alkali metal sulfosuccinate esters.

Exemplary alkali metal sulfosuccinate esters having utility in the present disclosure include sodium sulfosuccinate esters of the formula:

NaO₃SCH(CO₂R')CH₂CO₂R

wherein:
R is H, C₆-C₁₈ alkyl or (C₂-C₃)alkoxylated(C₆-C₁₈)alkyl; and,
R' is C₆-C₁₈ alkyl or (C₂-C₃)alkoxylated(C₆-C₁₈)alkyl.

Compounds in accordance with this formula may be either mono- or diesters, the use of the latter being preferred.

Commercial examples of suitable non-ionic surfactants include: Triton GR 5M (*1,4-bis(2-ethylhexyl) sodium sulfosuccinate*), available from Dow Chemical; LIAL^{®} and ISALCHEM^{®}, available from Sasol.

### Additives and Adjunct Ingredients

The present solutions may further comprise additives which are conventional in this field. In particular, the solutions might comprise, either alone or in combination: corrosion inhibitors, such as dialkylthioureas, cupric sulphate and copper sulphate; oxygen scavengers; stabilizers, including UV stabilizers; wetting agents; de-foaming agents; sequestrants; lubricants; and, rheological adjuvants for moderating the viscosity or thixotropic properties of the solutions and of which examples include thickeners, fillers and diluents.

Any such additives are necessarily minor ingredients of the present solutions and, when used, should only be used in amounts which are not deleterious to the performance of the solution. Further, as regards any additive or adjunct material, it is preferred that said material possess a flash point of at least 90°C, for example at least 100°C.

As further exemplary corrosion inhibitors mention may be made of the following commercial materials: the Rodine^{®} series, available from JMN Specialties, Inc. and Henkel Corporation; the Dodicor^{®} series, available from Clariant AG; and, the Armohib^{®} series available from Akzo Nobel Surfactants LLC.

Thickeners represent an optional component of the present solution and may constitute from 0 to 5 wt.% or from 0 to 2 wt.%, based on the total weight of the emulsion. Exemplary thickeners include but are not limited to: cellulosic thickeners and their derivatives; natural gums, such as guar gum, karaya gum, locust bean gum, carrageenan, tragacanth gum and xanthan gum; starches; stearates; fatty alcohols; hydrophobically modified alkali-soluble emulsion polymers (HASE); hydrophobically modified urethane-ethoxylate resins (HEUR); and, acrylic acid polymers and cross-polymers. The use of cellulosic thickeners and their derivatives may in particular be mentioned, of which examples include: carboxymethyl hydroxyethylcellulose; cellulose, hydroxybutyl methylcellulose; hydroxyethylcellulose; hydroxypropylcellulose; hydroxypropyl methyl cellulose; methylcellulose; microcrystalline cellulose; and, sodium cellulose sulfate.

The presence of non-polar co-solvents and non-polar diluents in the solutions of the present disclosure is also not precluded where this can usefully moderate the viscosities thereof. Where the necessary polar solvent comprises or consists of water, any added non-polar co-solvent(s) or diluent should be a water-immiscible compound. Such a compound may be selected from the group consisting of: alkanes (R-H); cyclic alkanes; branched alkanes; aromatics (Ar-H); alkyl halides (R-X); and, mixtures thereof. Exemplary but non-limiting non-polar, water-immiscible solvents which may be used alone or in combination, include n-pentane, n-hexane, cyclohexane, n-heptane, isooctane, trimethylpentane, toluene, xylene and benzene.

### Preparation of the Debonding Solutions

The debonding solutions are formulated by simple mixing of the various components, typically under agitation at room temperature. If necessary, the solution may be prepared well in advance of its application. However, in an interesting alternative embodiment, a concentrated debonding solution may first be obtained by mixing components with only a fraction of the solvent that would be present in the debonding solution as applied: the concentrated debonding solution may then be diluted with the remaining solvent shortly before its introduction into the debonding bath. It is considered that such concentrated debonding solutions may be prepared and stored as either single-package concentrates - that can be converted by dilution with solvent only - or as multi-part concentrates, two or more of which must be combined and diluted to form a complete working solution according to the disclosure. Any dilution can be effected simply by the addition of solvent - such as deionized and / or demineralized water - under mixing. The debonding solution might equally be prepared within a rinse stream whereby one or more streams of the concentrate(s) is injected into a continuous stream of solvent.

Without specific intention to limit the amount of solvent included in the debonding solutions, it is preferred that said solutions contain from 15 to 75 wt.%, preferably from 20 to 70 wt.% and more preferably from 20 to 60 wt.%, based on the weight of the solution, of solvent. In an alternative but not mutually exclusive characterization, the debonding solution may be defined by a viscosity of from 0.005 to 1 Pa.s (50 cps to 1000 cps), as measured using a Brookfield viscometer at 25°C.

### C) DEBONDING METHODS AND APPLICATIONS

The present disclosure further provides a method for debonding a bonded article as described herein above, said method comprising the steps of:
i) providing a bonded article as defined herein above, which bonded article comprises at least one layer of a first adhesive interposed between two substrate surfaces and said bonded article is further provided with at least one layer of a second adhesive which is interposed between said two substrate surfaces, wherein:
   the or each first adhesive layer has a dry film thickness of from 10 to 500 µm, preferably from 30 to 300 µm; and,
   said first adhesive is obtained by curing the afore-described two-composition (2K) composition based on epoxide compounds;
ii) treating the bonded article at a temperature of from 20 to 90°C with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 4 to 14; and,
iii) separating said at least one layer of first modified adhesive from its interposition between said two substrate surfaces.

In accordance with process aspects of the present disclosure, it is often advisable to remove foreign matter - such as oil, soil and metallic powder - from the provided bonded article by cleaning the relevant surfaces prior to step ii) of the recited method. Such treatments are known in the art and can be performed in a single or multi-stage manner constituted by, for instance, the use of one or more of: a waterborne cleaning emulsion; a cleaning solvent, such as carbon tetrachloride or trichloroethylene; and, a water rinse, preferably of deionized or demineralized water. After said cleaning, degreasing and / or pre-treatment steps, the debonding composition is applied to the substrate (*step ii*)). The debonding composition may be applied at ambient temperature or the temperature of the composition may be elevated prior to application to, for instance, a temperature in the range from 30°C to 90°C, for instance from 30°C to 75°C.

The provided bonded article may, in certain circumstances, be further pre-treated to mechanically remove a small fraction of the layer of first adhesive. The generation of small pits, crevices or cavities in an exposed surface of that layer of first adhesive can serve to create ingress sites for the subsequent contact between the debonding solution and that layer.

It is conventional commercially that an operating bath as hereinbefore described is prepared and the debonding solution is applied to the bonded article by, without limitation, immersion, flooding, air-atomized spraying, air-assisted spraying, airless spraying, high-volume low-pressure spraying and air-assisted airless spraying. The minimum contact time of the composition with the bonded article is most broadly that time which is sufficient to weaken the adhesive bonds to an extent to permit the components to be separate by reasonable or operable force. That contact time can be as little as 0.1 hours or as great as 48 hours in that instance where the debonding treatment is being performed at lower temperatures: however, dependent upon the pH and the concentration of the applied solution, and dependent upon the application temperature, a contact time of from 0.1 to 24 hours or from 0.5 to 20 hours would be more typical.

The present disclosure does not preclude supplementary debonding compositions being applied to the bonded articles either prior to the application of the disclosed solutions or subsequent to treatment of the bonded articles with the disclosed solutions. The present disclosure therefore envisages iterative processes in which treatment of the bonded articles with the described debonding solution constitutes at least one step. Any supplemental debonding compositions may be applied by any suitable means known in the art, such as by immersion, dipping, spraying, roll-coating, electrocoating; painting; brushing; wiping; air-atomized spraying; air-assisted spraying; airless spraying; high-volume low-pressure spraying; and, air-assisted airless spraying.

The removal of the substrates from the adhesive (*step iii*)) may or may not require the use of external force. For instance, external force may not be required where, after the application of the debonding composition(s), the adhesive has been completely separated from the substrate or even dissolved in the debonding composition(s). However, where at least part of the adhesive is still contacted with substrate(s), an external force may be used to completely delaminate or remove the adhesive. The external force - applied by, for instance, liquid washing or mechanical force - is used to compensate for the remaining bond strength between the adhesive(s) and the substrate(s).

In an embodiment, the tensile shear strength of the bonded substrates after step ii) is at most 20 MPa, for instance at most 15 MPa, at most 10 MPa or even at most 5 MPa as determined in accordance with ASTM-D1002.

After step iii), it is not precluded that the or each removed substrate be subjected to at least one cleaning step. Cleaning may be carried out in a conventional manner including but not limited to the use of: a waterborne cleaning emulsion; a cleaning solvent, such as carbon tetrachloride or trichloroethylene; a water rinse, preferably of deionized or demineralized water; a rinse of a dilute basic aqueous solution; and, a rinse of a dilute silicate solution. Further, at the conclusion of step iii) or any subsequent cleaning step, the removed substrate may be dried using, for instance, ambient air drying, circulating warm air, forced air drying or infrared heating. The surface temperature of the substrate(s) should be controlled during drying to obviate any undesired physical, morphological or chemical changes to the substrate.

Various features and embodiments of the disclosure are described in the following examples, which are intended to be representative and not limiting.

### EXAMPLES

The following commercial products are employed in the Examples below:

| | |
|---|---|
| Dipropyleneglycol DME: | Stabilized dipropyleneglycol dimethyl, available from Dow Chemical. |
| Methocell 311: | Hydroxypropyl methylcellulose, available from Dow Chemical. |
| Imsol R: | Mixture of dimethyl succinate, dimethyl glutarate and dimethyl adipate, available from Invista. |
| Triton GR 5M | 1,4-bis(2-ethylhexyl) sodium sulfosuccinate, available from Dow Chemical |
| Mergital MES 2: | Methyl oleate, available from BASF. |
| Teroson EP 5065: | Two-component epoxy adhesive, available from Henkel Corporation. |
| Saviva B 500: | Particulate superabsorbent polymer, available from BASF. |

All remaining compounds listed in the examples may be obtained from Sigma Aldrich.

*Lap Shear Strength Testing:* The lap shear test substrate was aluminium (Alu3003), the surface of which had been cleaned with an ethyl acetate wipe. The substrate was provided at a thickness of 0.1 inch and cut into six 2.5 cm x 10 cm (1" x 4") samples for tensile testing. Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated substrate was 2.5 cm x 2.5 cm (1" x 1") with a bond thickness of 0.1 cm (40 mil).

Adhesive composition Teroson EP 5065 was provided. Where applicable - and in accordance with Table 2 below - modified adhesive compositions were prepared by the addition of Saviva B in, respectively, amounts of 5 wt.%, 10 wt.% and 20 wt.% based on the weight of the composition. Each unmodified or modified adhesive composition was independently applied and cured in the overlapping region to a dry film thickness of 1 mm by the application of either a temperature of 60°C for 2 hours or a temperature of 40°C for 12 hours. The bonded structures - having the configuration shown in Figure 1 - were then stored at 25°C, 20% relative humidity for 24 hours prior to initial tensile testing.

For each bonded article, tensile lap shear strength was investigated initially and after 1 hour and 18 hours of complete immersion in the debonding solution, which solution is maintained at a temperature of 60°C. Where possible, three samples were tested for each contact-time data point and both the mean tensile lap shear strength and the standard deviation thereof were determined: the standard deviation is recorded in parentheses in the Tables below.

### Debonding Solution 1

A first debonding solution (DB1) was prepared in accordance with Table 1 herein below. The given ingredients were mixed in a speed mixer (1200 rpm; 1 minute) to ensure the formation of a homogenous mixture. The first debonding solution (DB1) had a pH of 3.7.

**Table 1**

| Ingredient | Percentage by Weight of Composition (Wt.%) |
|---|---|
| Dipropyleneglycol DME | 20.00 |
| Methocell 311 | 0.30 |
| Benzyl alcohol | 20.00 |
| Imsol R | 37.40 |
| Triton GR 5M | 1.00 |
| Formic acid (99%, aq.) | 1.00 |
| Mergital MES2 | 20.30 |

### Example 1

In this Example, the lap shear strength of bonded articles was investigated following the complete immersion of the bonded region of the substrates in the first debonding solution (DB1). The results are provided in Table 2 herein below.

**Table 2**

| Test No. | | 1 | 2 | 3 | 4 | 5 | 6 |
|---|---|---|---|---|---|---|---|
| Adhesive of Primer Layer | | None | Teroson EP 5065 | Teroson EP 5065 | Teroson EP 5065 | Teroson EP 5065 | Teroson EP 5065 |
| Primer Layer Thickness (microns) | | - | 1000 | 1000 | 1000 | 1000 | 1000 |
| Primer Layer Curing Condition | | - | 30 minutes, 100°C | 30 minutes, 100°C | 30 minutes, 100°C | 30 minutes, 100°C | 30 minutes, 100°C |
| Weight Percentage of Additive in Primer Layer | | - | 0.0 | 5.0 | 7.5 | 10.0 | 20.0 |
| Adhesive Layer | | Teroson EP 5065 | Teroson EP 5065 | Teroson EP 5065 | Teroson EP 5065 | Teroson EP 5065 | Teroson EP 5065 |
| Adhesive Curing Condition | | 2 hours, 60°C | 2 hours, 60°C | 2 hours, 60°C | 2 hours, 60°C | 2 hours, 60°C | 2 hours, 60°C |
| Debonding Solution | | DB1 | DB1 | DB1 | DB1 | DB1 | DB1 |
| Tensile Lap Shear Strength | 0 hours | | 20.7 | | 11.3 | | |
| (MPa) at Stated Contact Time | 1 hour | | 13.9 | | 15.3 | | |
| | 18 hours | | 8.0 | | 2.0 | | |

In view of the foregoing description and example, it will be apparent to those skilled in the art that equivalent modifications thereof can be made without departing from the scope of the claims.

## Claims

1. A two component composition comprising:
a first component comprising:
a) at least one epoxide compound; and,
a second component comprising:
b) at least one compound which provides at least one epoxide-reactive group;
c) at least one accelerator,
wherein the composition further comprises:
d) at least one particulate liquid-absorbent polymer,
and wherein the composition is **characterized by** a molar ratio of epoxide groups to epoxide-reactive groups (E^{R}) of from 0.6:1 to 1.2:1.

2. The two component composition according to claim 1 comprising, based on the weight of the composition:
from 30 to 70 wt.% of a) said at least one epoxide compound;
from 0.01 to 25 wt.% of b) said at least one compound which provides at least one epoxide-reactive group;
from 0.01 to 5 wt.% of c) said at least one accelerator; and,
from 1 to 50 wt.% of d) said at least one particulate liquid-absorbent polymer,
wherein the composition is **characterized by** a molar ratio of epoxide groups to epoxide-reactive groups (E^{R}) of from 0.6:1 to 1.2:1, preferably from 0.9:1 to 1.1:1.

3. The two component composition according to claim 1 or claim 2, wherein constituent a) comprises at least polyepoxide compound having an epoxide equivalent weight of from 100 to 700 g/eq.

4. The two component composition according to any one of claims 1 to 3, wherein constituent b) comprises at least one polyamine having at least two amine hydrogens reactive toward epoxide groups.

5. The two component composition according to any one of claims 1 to 5, wherein the or each particulate liquid-absorbent polymer is **characterized by** a mean volume particle size (Dv50) of from 0.1 to 1000 µm, preferably from 0.1 to 500 µm, more preferably from 0.1 to 250 µm, as determined by dynamic light scattering based on polymer particles of which the moisture content is less than 5 wt.%.

6. The two component composition according to any one of claims 1 to 5, wherein the or each particulate liquid-absorbent polymer is **characterized by**:
a shear modulus of less than or equal to 1000 Pascals, as determined at room temperature in accordance with ASTM E143-20 *Standard Test Method for Shear Modulus at Room Temperature;* and / or,
a centrifuge retention capacity of from 5 to 50 g/g, as determined at room temperature according to EDANA WSP 241.2. using an aqueous solution containing 0.9 wt.% NaCl.

7. The two component composition according to claim 6, wherein the or each particulate liquid-absorbent polymer is **characterized by**:
a shear modulus of from 250 to 1000 Pa, preferably from 500 to 1000 Pa; and / or,
a centrifuge retention capacity of from 10 to 50 g/g, preferably from 20 to 50 g/g.

8. A bonded article comprising at least one layer of a first adhesive interposed between two substrate surfaces, said bonded article being further provided with at least one layer of a second adhesive which is interposed between said two substrate surfaces, wherein:
the or each first adhesive layer has a dry film thickness of from 10 to 500 µm,
preferably from 30 to 300 µm; and,
said first adhesive is obtained by curing a two-component (2K) composition as defined in any one of claims 1 to 7.

9. A bonded article according to claim 8 comprising:
a first substrate having an inner surface; and,
a second substrate having an inner surface,
wherein said layers of the first and second adhesive are interposed between the inner surfaces of the first and second substrates.

10. The method according to claim 9, wherein at least one of said first and second substrates of the bonded article is metallic.

11. The method according to any one of claims 8 to 10, wherein at least one layer of said first adhesive directly contacts the surface of a substrate.

12. A method for debonding a bonded article as defined in any one of claims 8 to 11, said method comprising the steps of:
i) providing said bonded article;
ii) treating said bonded article at a temperature of from 20 to 90°C with a solution in a polar solvent of at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids, wherein said solution has a pH of from 4 to 14; and,
iii) separating said at least one layer of first adhesive from its interposition between said two substrate surfaces.

13. The method according to claim 12, wherein the debonding solution comprises, based on the weight of the solution:
from 5 to 30 wt.%, preferably from 5 to 25 wt.% of said at least one compound selected from the group consisting of: C₁₀ to C₂₆ fatty acids; salts of C₁₀ to C₂₆ fatty acids; and, C₁-C₄ alkyl esters of C₁₀ to C₂₆ fatty acids.

14. The method according to claim 12 or claim 13, wherein:
said at least one compound of the debonding solution is selected from the group consisting of: C₁₆-C₁₈ monounsaturated fatty acids; salts of C₁₆-C₁₈ monounsaturated fatty acids; and, C₁-C₄ alkyl esters of C₁₆-C₁₈ monounsaturated fatty acids; and,
preferably said at least one compound of the debonding solution is selected from the group consisting of: oleic acid; salts of oleic acid; and, C₁-C₂ alkyl esters of oleic acid.

15. The method according to any one of claims 12 to 14, wherein the polar solvent of the debonding solution comprises or consists of at least one compound selected from the group consisting of: water; polyalkylene glycol dialkyl ethers; and, dibasic esters.

16. The method according to any one of claims 12 to 15, wherein said treatment step ii) comprises at least partially immersing the bonded article in said debonding solution.

17. The method according to any one of claims 12 to 16, wherein said treatment step ii) is **characterized by** a contact time of from 0.1 to 24 hours, preferably from 0.5 to 20 hours.
